# EUROPÄISCHE PATENTSCHRIFT

(11) **EP 2 844 851 B1**
(45) Veröffentlichungstag und Bekanntmachung des Hinweises auf die Patenterteilung: **19.10.2016**
(21) Anmeldenummer: 13715167.6
(22) Anmeldetag: 27.03.2013
(51) Int. Cl.: F01N 3/20, F01N 11/00, G01F 23/00

(54) **VORRICHTUNG ZUM BEREITSTELLEN EINES FLÜSSIGEN ADDITIVS**
DELIVERY UNIT FOR DELIVERING A LIQUID ADDITIVE
UNITÉ DE DISTRIBUTION POUR DISTRIBUER UN ADDITIF LIQUIDE

(30) Priorität: 19.04.2012 DE 102012007691
(43) Veröffentlichungstag der Anmeldung: 11.03.2015
(73) Patentinhaber: Continental Automotive GmbH, 30165 Hannover (DE)
(72) Erfinder: HODGSON, Jan, 53840 Troisdorf (DE); SCHEPERS, Sven, 53844 Troisdorf (DE); BRÜCK, Rolf, 51429 Bergisch Gladbach (DE)
(86) Internationale Anmeldenummer: PCT/EP2013/056580
(87) Internationale Veröffentlichungsnummer: WO 2013/156286

(56) Entgegenhaltungen:
- WO-A1-2011/064050
- DE-A1-102007 016 858
- DE-A1-102007 059 853
- DE-A1-102009 000 062
- DE-A1-102010 024 554
- DE-A1-102010 035 008

## Beschreibung

Die Erfindung betrifft eine Vorrichtung zum Bereitstellen eines flüssigen Additivs für ein Kraftfahrzeug. Flüssige Additive werden im Kraftfahrzeugbereich beispielsweise in Abgasbehandlungsvorrichtungen benötigt.

Es sind beispielsweise Vorrichtungen bekannt, bei denen Abgasreinigungsverfahren durchgeführt werden, wobei die Abgase einer Verbrennungskraftmaschine unter Zuhilfenahme eines flüssigen Additivs gereinigt werden. Ein besonders bekanntes Abgasreinigungsverfahren, für welches ein flüssiges Additiv benötigt wird, ist das Verfahren der selektiven katalytischen Reduktion [SCR-Verfahren, SCR = Selective Catalytic Reduction]. Bei diesem Verfahren wird ein Reduktionsmittel bzw. ein Reduktionsmittelvorläufer als (bevorzugt) flüssiges Additiv einer Abgasbehandlungsvorrichtung zugeführt. Mit diesem Reduktionsmittel bzw. mit diesem Reduktionsmittelvorläufer wird in der Abgasbehandlungsvorrichtung eine Umsetzung von Stickstoffoxidverbindungen durchgeführt. Als Reduktionsmittel wird bei diesem Verfahren normalerweise Ammoniak eingesetzt. Ammoniak wird im Kraftfahrzeugbereich üblicherweise nicht direkt bevorratet, sondern beispielsweise in Form einer Reduktionsmittelvorläuferlösung, die als flüssiges Additiv der Abgasbehandlungsvorrichtung zugeführt werden kann. Diese Reduktionsmittelvorläuferlösung wird dann in der Abgasbehandlungsvorrichtung zu Ammoniak (dem eigentlichen Reduktionsmittel) umgesetzt. Als Reduktionsmittelvorläuferlösung wird beispielsweise Harnstoff-Wasser-Lösung eingesetzt. Für die Abgasreinigung ist eine 32,5 prozentige Harnstoff-Wasser-Lösung unter dem Handelsnamen AdBlue® erhältlich.

Zur Bereitstellung einer derartigen Harnstoff-Wasser-Lösung bzw. eines derartigen Reduktionsmittels in Kraftfahrzeugen ist eine Vorrichtung zur Bereitstellung vorgesehen, welche einen Tank zur Speicherung des flüssigen Additivs und eine Fördereinheit zur Förderung des flüssigen Additivs aufweist. Außerdem ist typischerweise ein Injektor oder ein vergleichbarer Zugabeapparat vorgesehen, über welchen das flüssige Additiv der Abgasbehandlungsvorrichtung zugeführt werden kann. Die Fördereinheit ist dann dazu eingerichtet, das flüssige Additiv aus dem Tank zu dem Injektor zu fördern. Zur Bestimmung der in dem Tank gespeicherten Menge an flüssigem Additiv ist regelmäßig ein Füllstandsensor vorgesehen, mit dem der Füllstand des flüssigen Additivs im Tank überwacht werden kann.

Es ist bekannt, als Füllstandsensor einen Ultraschallsensor zu verwenden, welcher Schallwellen ausstrahlen kann. Diese Schallwellen werden an einer Flüssigkeitsoberfläche des flüssigen Additivs in dem Tank reflektiert und zurück zu dem Ultraschallsensor geleitet, welcher die reflektierten Wellen empfängt. Durch eine Laufzeitmessung der Schallwellen ist es möglich, den Abstand zwischen der Flüssigkeitsoberfläche des flüssigen Additivs in dem Tank und dem Ultraschallsensor zu bestimmen. Der Abstand der Flüssigkeitsoberfläche kann als Information über den Füllstand in dem Tank verwendet werden.

Besonders vorteilhaft ist es, den Weg der Schallwellen durch ein mit dem flüssigen Additiv gefüllten Rohr bzw. einen Kanal zu begrenzen bzw. vorzugeben, beispielsweise um eine präzise Ausrichtung der Schallwellen auf die Flüssigkeitsoberfläche des flüssigen Additivs zu erreichen. Problematisch ist hierbei jedoch, dass sich in einem Tank für flüssiges Additiv regelmäßig (feste) Ablagerungen bilden. Wenn das flüssige Additiv Harnstoff-Wasser-Lösung ist, können derartige Ablagerungen beispielsweise durch Umwandlungsprozesse aus der Harnstoff-Wasser-Lösung selbst entstehen. Die Ablagerungen können auch aus Verunreinigungen bestehen, welche beim Befüllen und/oder beim Nachfüllen des Tanks mit flüssigem Additiv in den Tank gelangt sind. Wenn eine Röhre bzw. ein Kanal zur Ausrichtung der Schallwellen vorgesehen ist, bilden sich derartige Ablagerungen besonders häufig in dem Kanal.

Aus der DE 10 2007 016 858 A1 ist eine Vorrichtung mit einem Vorratsbehälter für flüssiges Additiv und einem Füllstandsensor bekannt. Der Füllstandsensor umfasst einen Ultraschallsensor, der im Bereich des Tankbodens in einem Rohr angeordnet ist. Die Schallwellen werden durch das Rohr bis zu der Oberfläche des im Tank enthaltenen Additivs geleitet und dort reflektiert.

Die DE 10 2009 000 062 A1 betrifft einen Tank für eine Harnstoff-Wasser-Lösung, der einen Sensor zur Bestimmung des Füllstands aufweist. Der Sensor strahlt Wellen ab und empfängt diese und ist dazu eingerichtet, über eine Laufzeitmessung der Wellen entlang einer Messstrecke zu einer Flüssigkeitsoberfläche den Füllstand in dem Tank zu bestimmen. Dieser Messkanal ist als Schwalltopf beschrieben.

Die DE 10 2010 035 008 A1 betrifft einen Tank mit einem Sensor zur Bestimmung des Füllstands, welcher Schallwellen aussendet und empfängt.

Die WO 2011/064050 A1 betrifft ein Verfahren zur Bestimmung eines Zustands eines Reduktionsmittels in einem Reduktionsmitteltank. bei dem ein Ultraschallsensor verwendet wird, welcher Schallwellen in den Tank aussendet und Schallwellen empfängt..

Hiervon ausgehend ist es Aufgabe der vorliegenden Erfindung, die geschilderten technischen Probleme zu lösen bzw. zumindest zu lindern. Es soll insbesondere eine besonders vorteilhafte Vorrichtung zur Bereitstellen eines flüssigen Additivs vorgestellt werden. Dabei soll der Aufbau der Vorrichtung insbesondere technisch einfach und robust für einen präzisen, dauerhaften Gebrauch in einem Kraftfahrzeug sein.

Diese Aufgaben werden gelöst mit einer Vorrichtung gemäß den Merkmalen des Patentanspruchs 1. Weitere vorteilhafte Ausgestaltungen der Vorrichtung sind in den abhängig formulierten Patentansprüchen angegeben.

Die Erfindung betrifft eine Vorrichtung zur Bereitstellung eines flüssigen Additivs für ein Kraftfahrzeug, aufweisend einen Tank zur Speicherung des flüssigen Additivs und eine Fördereinheit zur Förderung des flüssigen Additivs aus dem Tank, und einen Sensor, welcher Wellen abstrahlt und empfängt und dazu eingerichtet ist, über eine Laufzeitmessung der Wellen entlang einer Messtrecke zu einer Flüssigkeitsoberfläche in dem Tank und zurück zu dem Sensor den Füllstand des flüssigen Additivs in dem Tank zu messen, wobei die Messtrecke zumindest teilweise durch einen Messkanal verläuft, und weiter zumindest eine Rückspülleitung in den Messkanal mündet, so dass eine Spülung des Messkanal hin zum Tank erfolgen kann.

Dieses Konzept erlaubt eine bedarfsgerechte Reinigung des Messkanals mit einfachen technischen Mitteln.

Die Vorrichtung zur Bereitstellung des flüssigen Additivs umfasst neben dem Tank und der Fördereinheit vorzugsweise einen Injektor oder dergleichen, über welchen das flüssige Additiv einer Abgasbehandlungsvorrichtung zugeführt werden kann. Der Injektor kann insbesondere ein Dosierventil und/oder eine Eindüsstelle umfassen. Der Begriff "Injektor" wird hier also als Oberbegriff für alle denkbaren (aktiv betätigbaren und/oder passiv agierenden) Vorrichtungen zur Abgabe und Zufuhr von flüssigem Additiv in eine Abgasbehandlungsvorrichtung verwendet. Der Injektor ist vorzugsweise über eine Leitung mit der Fördereinheit und dem Tank verbunden. Durch die Leitung kann das flüssige Additiv zu dem Injektor gefördert werden.

Die Fördereinheit weist zur Förderung des flüssigen Additivs vorzugsweise eine Pumpe auf. Eine Dosierung des flüssigen Additivs in die Abgasbehandlungsvorrichtung (das heißt die möglichst exakte Zugabe einer vorgegebenen Menge oder eines vorgegebenen Massenstroms des flüssigen Additivs in die Abgasbehandlungsvorrichtung) kann von der Fördereinheit und/oder von dem Injektor durchgeführt werden. Wenn die Fördereinheit die Dosierung vorgibt, weist die Fördereinheit vorzugsweise eine Dosierpumpe auf, mit welcher die geförderte Menge an flüssigem Additiv genau eingestellt werden kann. Wenn die Dosierung mit Hilfe des Injektors erfolgt, weist der Injektor vorzugsweise ein aktiv ansteuerbares Dosierventil auf. Die Fördereinheit weist dann vorzugsweise eine Pumpe auf, mit der das flüssige Additiv dem Injektor unter einem vorgegebenen Druck bereitgestellt werden kann. Mittels der Öffnungszeit des Dosierventils in dem Injektor kann dann die einer Abgasbehandlungsvorrichtung zugeführte Menge an flüssigem Additiv präzise eingestellt werden.

Der Sensor ist vorzugsweise ein Ultraschallsensor, welcher Ultraschallwellen abstrahlt und empfängt. Der Sensor weist dazu vorzugsweise eine Sendeeinheit, welche die Ultraschallwellen abstrahlt, und eine Empfangseinheit, welche die Ultraschallwellen empfängt, auf. Soweit nachfolgend "Wellen" angesprochen werden, sind insbesondere Ultraschallwellen gemeint.

Die Messstrecke, insbesondere eine Position und eine Ausrichtung der Messstrecke, sind vorzugsweise durch die Ausrichtung des Sensors vorgegeben. Der Sensor strahlt Wellen typischerweise in einer bestimmten Richtung ab. Die Messtrecke erstreckt sich ausgehend von dem Sensor entlang der von dem Sensor abgestrahlten Ultraschallwellen. Dadurch wird durch die Ausrichtung des Sensors die Messstrecke vorgegeben. Mit dem Begriff Messstrecke ist der Weg gemeint, den von dem Sensor ausgestrahlte Wellen hin zu der Flüssigkeitsoberfläche und ausgehend von der Flüssigkeitsoberfläche wieder zurück zu dem Sensor nehmen.

Um die Messstrecke zu schützen und die Ausbreitung der abgestrahlten (und reflektierten) Wellen entlang der Messstrecke zu unterstützen, verläuft die Messstrecke hier durch einen Messkanal. Dabei werden von dem Sensor ausgestrahlte Wellen, die die Messstrecke (beispielsweise aufgrund von Streuung und/oder Reflexionen) verlassen würden, durch eine Wandung des Messkanals wieder zurück in die Messstrecke reflektiert. Der Sensor ist vorzugsweise unmittelbar an/in dem Messkanal angeordnet, so dass die Messstrecke ausgehend von dem Sensor zunächst durch den Messkanal hindurch verläuft. An einem (dem Sensor gegenüberliegenden ersten) Kanalende des Messkanals verlässt die Messstrecke dann den Messkanal und verläuft durch den Tank hin zu einer Flüssigkeitsoberfläche. Die Messstrecke und der Messkanal sind dabei entsprechend dem Füllstand des flüssigen Additivs im Tank mit Additiv ausgefüllt.

Die Flüssigkeitsoberfläche stellt den Flüssigkeitsspiegel dar, welchen das flüssige Additiv in dem Tank bildet und ist aus diesem Grund repräsentativ für den Füllstand des flüssigen Additivs in dem Tank.

Die Rückspülleitung mündet vorzugsweise in unmittelbarer Nähe zu dem Sensor (und bevorzugt an einem anderen Kanalende des Messkanals, an dem auch der Sensor angeordnet ist) in den Messkanal ein. So kann der Messkanal bei einer Spülung ausgehend von der Rückspülleitung hin zu dem (ersten oder gegenüberliegenden) Kanalende praktisch vollständig durchspült werden. Vorzugsweise mündet die Rückspülleitung so in den Messkanal, dass das darüber eingebrachte Spülmedium die gesamte Strecke von dem Sensor hin zum (ersten oder gegenüberliegenden) Kanalende durchströmen kann. Durch eine Spülung des Messkanals können Ablagerungen, welche sich in dem Messkanal gebildet haben, zurück in den Tank gespült werden.

Der Messkanal befindet sich vorzugsweise in einem geringen Abstand zu einem Boden des Tanks. Hierdurch kann erreicht werden, dass der Kanal auch bei einem niedrigen Füllstand des flüssigen Additivs in dem Tank vollständig mit flüssigem Additiv gefüllt ist und so auch bei einem niedrigen Füllstand eine Messung des Füllstands mit Hilfe des Sensors erfolgen kann. Vorzugsweise ist der Kanal in einem Abstand von weniger als 15 cm, besonders bevorzugt weniger als 10 cm vom Boden des Tanks entfernt angeordnet. Hiermit ist insbesondere gemeint, dass sich jeder beliebige Punkt des Messkanals in einem solchen Abstand zu einer (gedachten) Bodenebene des Tanks befindet.

In einer weiteren vorteilhaften Ausgestaltung der Vorrichtung befindet sich innerhalb des Messkanals eine Referenzfläche, welche so angeordnet ist, dass ein Teil der von dem Sensor abgestrahlten Wellen reflektiert wird und zurück zu dem Sensor gelangt. Dieser Teil der Wellen gelangt somit nicht bis zu der Flüssigkeitsoberfläche sondern wird von der Referenzfläche bereits vorher zurück zu dem Sensor reflektiert. So kann eine Referenzlaufzeitmessung der Wellen in dem flüssigen Additiv durchgeführt werden. Diese Referenzlaufzeitmessung kann als Referenzlaufzeitmessung für die zur Füllstandbestimmung verwendete Laufzeitmessung verwendet werden. Andererseits kann diese Laufzeitmessung dazu verwendet werden, die Qualität des flüssigen Additivs zu bestimmen. Wenn das flüssige Additiv Harnstoff-Wasser-Lösung ist, ist die Ausbreitungsgeschwindigkeit der Wellen des Sensors in dem flüssigen Additiv zumindest teilweise abhängig von der Konzentration der Harnstoff-Wasser-Lösung. So kann über eine Laufzeitmessung zu einer Referenzfläche und zurück zu dem Sensor eine Bestimmung der Konzentration des flüssigen Additivs erfolgen.

Die Spülung des Messkanals durch die Rückspülleitung kann beispielsweise mit flüssigem Additiv als Fluid erfolgen. Es ist aber möglich, dass ein weiteres Fluid zur Spülung des Kanals verwendet wird. Als Spülfluid kann beispielsweise Luft verwendet werden, welche durch die Rückspülleitung in den Messkanal eingebracht wird. Die eingebrachte Luft gelangt bei der Spülung dann in den Tank und steigt dort in Form von Luftblasen auf. Die Luft stört daher in dem Tank nicht.

Vorteilhaft ist die beschriebene Vorrichtung, wenn die Vorrichtung eine Rückspülleitung aufweist, die an die Fördereinheit angeschlossen ist und zur Spülung des Messkanals eine Kreisförderung von flüssigem Additiv durch die Fördereinheit, die Rückspülleitung und den Messkanal zurück in den Tank ermöglicht.

Bei einer derartigen Vorrichtung kann der Messkanal mit Hilfe von flüssigem Additiv als Spülmedium gespült werden. Dies ist besonders vorteilhaft, weil wenig zusätzliche Komponenten zur Durchführung der Spülung vorhanden sein müssen. Dies ist insbesondere ein Vorteil gegenüber der (grundsätzlich auch möglichen) Spülung mit Luft. Außerdem weisen Fördereinheiten für flüssiges Additiv häufig ohnehin eine Rückspülleitung auf, durch die eine Kreisförderung von flüssigem Additiv möglich ist. Diese Rückspülleitungen dient beispielsweise dazu, Luftblasen aus der Fördereinheit hinaus zu befördern und/oder die Fördereinheit (teilweise) zu leeren. Bei der beschriebenen Vorrichtung kann diese Rückspülleitung zusätzlich zur Reinigung des Messkanals verwendet werden. Dies stellt einen besonders vorteilhaften Synergieeffekt dar.

Zur Kreisförderung weist die Fördereinheit vorzugsweise in einem Förderkanal in Förderrichtung hinter der Förderpumpe eine Verzweigung auf, an der die Rückspülleitung von einer Auslassleitung (die von der Pumpe in Richtung zu dem Injektor verläuft) abzweigt. Vorzugsweise ist an der Rückspülleitung ein Rücklaufventil angeordnet, mit dem die Rückspülleitung aktiv geöffnet und geschlossen werden kann. Wenn das Rücklaufventil geöffnet ist, wird ein Spülvorgang bzw. eine Kreisförderung durchgeführt. Wenn das Rücklaufventil geschlossen ist, führt die Fördereinheit eine reguläre Förderung von flüssigem Additiv hin zum Injektor durch.

Eine derartige Vorrichtung zur Bereitstellung von flüssigem Additiv ermöglicht eine Spülung des Messkanals und ist gleichzeitig besonders kostengünstig und einfach aufgebaut.

Weiterhin ist die Vorrichtung vorteilhaft, wenn die Rückspülleitung direkt mit dem Tank verbunden ist, so dass durch Bewegungen des flüssigen Additivs in dem Tank eine Spülung des Messkanals über die Rückspülleitung erfolgt.

Auch bei dieser Gestaltung der Vorrichtung erfolgt eine Spülung des Messkanals mit Hilfe des flüssigen Additivs. Schwappbewegungen des flüssigen Additivs unterstützen hierbei die Spülung des Messkanals. Schwappbewegungen des flüssigen Additivs in dem Tank ergeben sich beispielsweise während der Fahrt eines Kraftfahrzeugs infolge von Beschleunigungen oder Kurvenfahrten. Der Messkanal bildet zusammen mit der Rückspülleitung bei dieser Ausgestaltung vorzugsweise einen durchgängigen Kanalabschnitt, der beidseits mit dem Tank in Verbindung steht. Die Anordnung erfolgt dabei bevorzugt so, dass bei der Bewegung des flüssigen Additivs in dem Tank die bevorzugte Strömungsrichtung der Senderichtung des Sensors entspricht. Dies kann durch eine entsprechende Lage und/oder Strömungswiderstände im Bereich des Kanalabschnitts erreicht werden. Dadurch werden Ablagerungen aus dem Kanal hinausgespült.

Grundsätzlich können beide vorstehend genannten Varianten auch kombiniert werden. Eventuell ist auch realisiert, dass mit der mit der Fördereinheit verbundenen Rückspülleitung eine aktive, gezielt auslösbare Spülung (in einer ersten Spülrichtung) und/oder (ansonsten) eine passive Spülung (falls gewünscht in einer anderen Spülrichtung) mittels der (direkt) mit dem Tank verbundenen Rückspülleitung erfolgen kann.

Weiterhin ist die Vorrichtung vorteilhaft, wenn der Messkanal zumindest ein erstes Kanalende aufweist, welches mit dem Tank verbunden ist und die Rückspülleitung ein zweites Kanalende aufweist, welches mit dem Tank verbunden ist, wobei das erste Kanalende und das zweite Kanalende auf derselben geodätischen Höhe in den Tank münden.

Besonders bevorzugt ist, wenn der Tank im Bereich des ersten Kanalendes und des zweiten Kanalendes (also dort, wo die Kanalenden direkt in den Tank einmünden) jeweils eine Vertiefung aufweist. Dadurch kann erreicht werden, dass beim Spülen des Messkanals durch Schwappbewegungen des Additivs im Tank sich Ablagerungen jeweils in den angesprochenen Vertiefungen sammeln und nicht zurück in den Messkanal gelangen. Die Anordnung auf derselben geodätischen Höhe meint, dass die beiden Kanalenden bei einer Ausrichtung der Vorrichtung in einer vorgesehenen Einbaulage auf derselben Höhe angeordnet sind. Hierdurch kann erreicht werden, dass das flüssige Additiv bei Schwappbewegungen unproblematisch in die Rückspülleitung eintritt und den Messkanal spült, ohne dass ein großer Strömungswiderstand überwunden werden muss. Vorzugsweise weisen der Messkanal und die Rückspülleitung eine ebene Grundfläche ohne Rücksprünge und Vorsprünge auf. Hierdurch kann vermieden werden, dass sich Ablagerungen in dem Kanal selbst halten. Auch leichte Schwappbewegungen können dann zu einer ausreichenden Spülung des Messkanals führen, um Ablagerungen hinauszufördern.

Weiterhin ist die Vorrichtung vorteilhaft, wenn in der Messstrecke ein Umlenkmittel vorgesehen ist, welches dazu geeignet ist, von dem Sensor ausgesendete Wellen aus dem Messkanal heraus und hin zu der Flüssigkeitsoberfläche umzulenken.

Bereits weiter oben wurde erläutert, dass der Messkanal vorzugsweise in einem geringen Abstand (beispielsweise weniger als 15 cm) zu dem Boden des Tanks verläuft. Hierbei ist der Messkanal vorzugsweise in einem flachen Winkel beispielsweise von maximal 10° und besonders bevorzugt maximal 5° zu dem Boden des Tanks, bzw. einer von dem Boden des Tanks gebildeten Ebene geneigt angeordnet. Um den Füllstand des flüssigen Additivs in dem Tank besonders vorteilhaft messen zu können, ist es vorteilhaft, wenn die ausgesendeten Wellen möglichst senkrecht auf die Flüssigkeitsoberfläche in dem Tank treffen. Daher ist es vorteilhaft, zwischen dem Bereich der Messstrecke, welche durch den Messkanal verläuft, und dem Bereich der Messstrecke, welche hin zu der Flüssigkeitsoberfläche verläuft, ein Umlenkmittel vorzusehen. Ein derartiges Umlenkmittel kann beispielsweise von einer angeschrägten Oberfläche und/oder einem Prisma gebildet werden.

Weiterhin ist die Vorrichtung vorteilhaft, wenn der Messkanal parallel zur Flüssigkeitsoberfläche verläuft. So kann erreicht werden, dass der Messkanal auch bei besonders niedrigem Füllstand vollständig mit flüssigem Additiv gefüllt ist. Insbesondere wenn in der Messstrecke und/oder in dem Messkanal eine Referenzfläche (wie weiter oben beschrieben) vorgesehen ist, kann so erreicht werden, dass die Referenzfläche auch bei niedrigen Füllständen bedeckt ist und eine besonders effiziente Referenzmessung erfolgen kann.

Vorzugsweise ist ein Umlenkmittel zur Umlenkung der Wellen in einer Ausbreitungsrichtung der Wellen entlang der Messstrecke unmittelbar hinter dem Messkanal (am ersten Kanalende) angeordnet. Dies ermöglicht eine besonders kompakte Bauform der Messstrecke und des Umlenkmittels zur Umlenkung der Wellen hin zu der Flüssigkeitsoberfläche.

Weiterhin ist die Vorrichtung vorteilhaft, wenn die Fördereinheit ein Gehäuse aufweist, welches den Sensor und den Messkanal umfasst, wobei das Gehäuse am Boden des Tanks angeordnet ist.

Vorzugsweise weist der Tank am/im Boden eine Öffnung auf, in welche die Fördereinheit mit dem Messkanal und dem Sensor als kompakte Funktionseinheit integriert ist, so dass sich die Fördereinheit ausgehend vom Boden des Tanks in einen Innenraum des Tanks hinein erstreckt. An der Öffnung im Boden des Tanks und/oder an dem Gehäuse der Fördereinheit können dazu ein Flansch und/oder ein Verschluss (beispielsweise ein SAE-Verschluss) angeordnet sein, mit welchen das Gehäuse der Fördereinheit bzw. die Fördereinheit fluiddicht und mechanisch fest in den Tank eingesetzt ist.

Weiterhin ist vorteilhaft, wenn das Gehäuse eine Einbuchtung aufweist, in der der Messkanal mit einem ersten Kanalende in den Tank mündet.

Das Gehäuse ist vorzugsweise rund bzw. weist eine zylindrische Grundform auf, damit es technisch einfach im Tankboden besonders dicht und ausgerichtet eingesetzt werden kann. Die Einbuchtung stellt eine (wenigstens teilweise zum Zentrum hin gerichtete) Abweichung von dieser zylindrischen Grundform dar, die das Innenvolumen des Gehäuses verkleinert und das mit flüssigem Additiv gefüllte Innenvolumen des Tanks, welches das Gehäuse umgibt, vergrößert. Wenn das Gehäuse eine Einbuchtung aufweist, in welcher der Messkanal mit einem ersten Kanalende in den Tank mündet, kann beispielsweise ein Umlenkmittel zur Umlenkung der Wellen entlang der Messstrecke noch in der Einbuchtung angeordnet sein. So kann die von der Fördereinheit und dem Gehäuse und dem Sensor gebildete Funktionseinheit besonders kompakt ausgeführt und unabhängig vom Tank bereitgestellt werden. Insbesondere ist es vorteilhaft, wenn das Umlenkmittel noch innerhalb der (gedachten bzw. geschlossenen) zylindrischen Grundform angeordnet ist. So kann eine Montage des Gehäuses und der Fördereinheit in dem Tank vereinfacht werden.

Weiterhin ist die Vorrichtung vorteilhaft, wenn das Gehäuse zumindest teilweise von einem Filter umgeben ist, durch den die Fördereinheit dem Tank das flüssige Additiv entnimmt, wobei der Filter den Messkanal nicht abdeckt.

Der Messkanal ist insbesondere für das flüssige Additiv ausgehend von dem Tank frei zugänglich. Flüssiges Additiv, welches ausgehend von dem Tank in den Messkanal einströmt und/oder ausströmt, wird insbesondere nicht gefiltert bzw. passiert nicht den Filter. Der Filter weißt vorzugsweise zumindest eine Befestigungseinrichtung auf, mit welcher der Filter fest an dem Gehäuse montiert werden kann. Der Filter stellt für das flüssig Additiv regelmäßig einen Strömungswiderstand dar, der eine Angleichung des Füllstandniveaus vor dem Filter (in dem Tank) und hinter dem Filter (in dem Bereich, in dem das flüssige Additiv bereits gefiltert ist) behindert oder verzögert. Durch einen freien Zugang des flüssigen Additivs zu dem Messkanal kann gewährleistet sein, dass der Füllstand mit Hilfe des Sensors, welcher in dem Messkanal angeordnet ist, besonders präzise bestimmt werden kann.

Im Rahmen der Erfindung wird auch ein Kraftfahrzeug vorgeschlagen, aufweisend eine Verbrennungskraftmaschine und eine Abgasbehandlungsvorrichtung zur Reinigung der Abgase der Verbrennungskraftmaschine, sowie eine beschriebene Vorrichtung, wobei der Abgasbehandlungsvorrichtung mit der beschriebenen Vorrichtung ein flüssiges Additiv zugeführt werden kann.

In der Abgasbehandlungsvorrichtung kann vorzugsweise das Verfahren der selektiven katalytischen Reduktion durchgeführt werden, wobei das mit der Vorrichtung zugeführte flüssige Additiv vorzugsweise Reduktionsmittel bzw. Reduktionsmittelvorläuferlösung für das SCR-Verfahren ist.

Klar ist, dass sich aus der obigen und nachfolgenden Beschreibung für den Fachmann eine Vielzahl von Abwandlungen ergeben. Dies kann beispielsweise die Anzahl der Sensoren, Messkanäle, Spülsysteme, Umlenkmittel, etc. betreffen.

Die Erfindung, sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Insbesondere ist darauf hinzuweisen, dass die Figuren und insbesondere die dargestellten Größenverhältnisse nur schematisch sind. Es zeigen:
- Fig. 1:: eine beschriebene Vorrichtung,
- Fig. 2:: einen Ausschnitt einer Fördereinheit für eine beschriebene Vorrichtung,
- Fig. 3:: einen weiteren Ausschnitt einer Fördereinheit für eine beschriebene Vorrichtung,
- Fig. 4:: eine Ansicht von oben einer ersten Ausführungsvariante einer Fördereinheit für eine beschriebene Vorrichtung,
- Fig. 5:: eine Ansicht von oben einer zweiten Ausführungsvariante einer Fördereinheit für eine beschriebene Vorrichtung, und
- Fig. 6:: ein Kraftfahrzeug aufweisend eine beschriebene Vorrichtung.

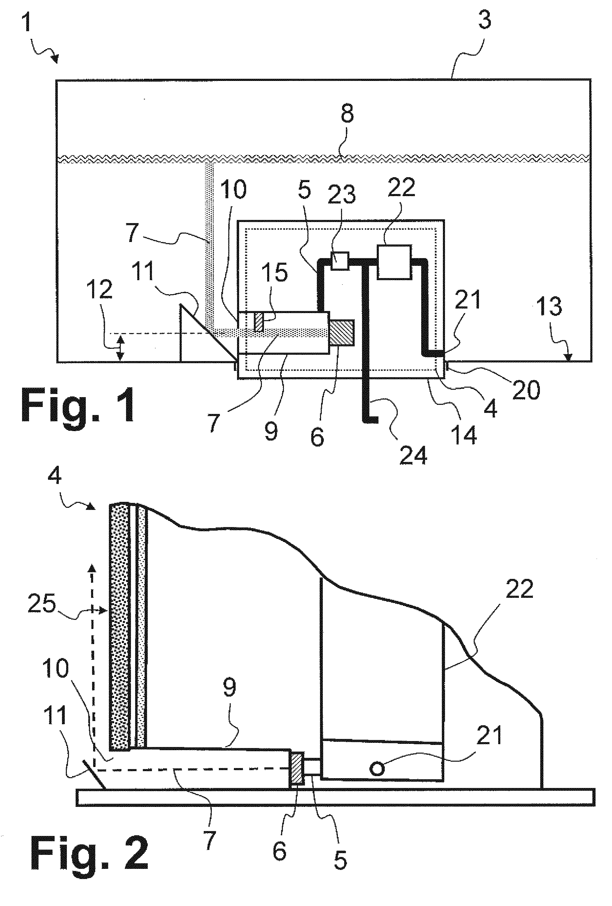

In Fig. 1 ist eine Vorrichtung 1 dargestellt, welche einen Tank 3 und eine Fördereinheit 4 aufweist. Die Fördereinheit 4 ist durch eine Öffnung 20 in einen Boden 13 des Tanks 3 eingesetzt, so dass sich die Fördereinheit 4 bzw. das Gehäuse 14 der Fördereinheit 4 ausgehend vom Boden 13 des Tanks 3 in einen mit flüssigem Additiv auffüllbaren Innenraum des Tanks 3 erstreckt. Die Fördereinheit 4 weist eine Pumpe 22 auf, mit der flüssiges Additiv aus dem Tank 3 an einer Ansaugstelle 21 entnommen werden kann. Das von der Pumpe 22 geförderte flüssige Additiv kann über eine Auslassleitung 24 für einen Injektor (beispielsweise an einer Abgasbehandlungsvorrichtung) bereitgestellt werden. Außerdem ist es möglich, das flüssige Additiv, welches von der Pumpe 22 gefördert wurde, über eine Rückspülleitung 5 in einen Messkanal 9 zu fördern. Die Förderung des flüssigen Additivs durch die Rückspülleitung 5 kann mit Hilfe eines Rücklaufventils 23 gesteuert werden. Die Rückspülleitung 5 zweigt von der Auslassleitung 24 ab.

Die Vorrichtung 1 weist einen Sensor 6 auf, welcher vorzugsweise ein Ultraschallsensor ist. Dieser Sensor 6 ist an dem Messkanal 9 angeordnet. Ausgehend von dem Sensor 6 erstreckt sich eine Messstrecke 7, über welche eine Laufzeitmessung für Wellen von dem Sensor 6 hin zu einer Flüssigkeitsoberfläche 8 des flüssigen Additivs in dem Tank 3 und zurück zu dem Sensor 6 durchgeführt werden kann. Über diese Laufzeitmessung ist es möglich, den Füllstand des flüssigen Additivs in dem Tank 3 zu bestimmen. Die Messstrecke 7 verläuft ausgehend von dem Sensor 6 zunächst durch den Messkanal 9, welcher mit Hilfe der Rückspülleitung 5 gespült werden kann. Nach dem Messkanal 9 wird die Messstrecke 7 an dem Umlenkmittel 11 umgelenkt, so dass sie senkrecht (von unten) auf die Flüssigkeitsoberfläche 8 des flüssigen Additivs in dem Tank 3 trifft. An der Flüssigkeitsoberfläche 8 werden die Wellen (teilweise) reflektiert, um dann von dem Umlenkmittel 11 wieder zurück zu dem Sensor 6 durch den Messkanal 9 gelenkt zu werden. In dem Messkanal 9 befindet sich eine Referenzfläche 15, welche einen Teil der von dem Sensor 6 abgestrahlten Wellen reflektiert, so dass diese direkt zurück zu dem Sensor 6 gelangen. Durch eine Messung der Laufzeit von dem Sensor 6 zu der Referenzfläche 15 und zurück ist es möglich, eine Referenzlaufzeitmessung durchzuführen. Diese Referenzlaufzeitmessung kann einerseits dazu verwendet werden, um mit der Laufzeitmessung zur Flüssigkeitsoberfläche 8 verrechnet zu werden und um hierdurch den Abstand der Flüssigkeitsoberfläche 8 von dem Sensor 6 entlang der Messstrecke 7 zu bestimmen. Zusätzlich kann die Referenzmessung für eine Qualitätsmessung des flüssigen Additivs in dem Tank 3 verwendet werden.

Die Darstellung in Fig. 2 zeigt einen Ausschnitt einer Fördereinheit 4 für eine beschriebene Vorrichtung. In diesem Ausschnitt ist ebenfalls der Messkanal 9 zu erkennen, an den der Sensor 6 angrenzt und in den die Rückspülleitung 5 mündet. Die Rückspülleitung 5 ist an die Pumpe 22 angeschlossen, um eine Spülung des Messkanals 9 bedarfsgerecht durchzuführen. Zu erkennen ist auch die Ansaugstelle 21, an welcher die Pumpe 22 dem Tank das flüssige Additiv entnimmt. Weiterhin ist ein Filter 25 zu erkennen, der praktisch die gesamte Fördereinheit 4 umgibt und somit auch die Ansaugstelle 21 mit abdeckt. Ausgehend von dem Sensor 6 verläuft hin zu einem Umlenkmittel 11 durch den Messkanal 9 die Messstrecke 7, entlang welcher der Sensor Wellen abstrahlt und empfängt. An dem Umlenkmittel 11 (dort wo die Messstrecke 7 den Kanal 9 an einem ersten Kanalende 10 verlässt) wird die Messstrecke 7 hin zu einer Flüssigkeitsoberfläche des flüssigen Additivs in dem Tank umgelenkt.

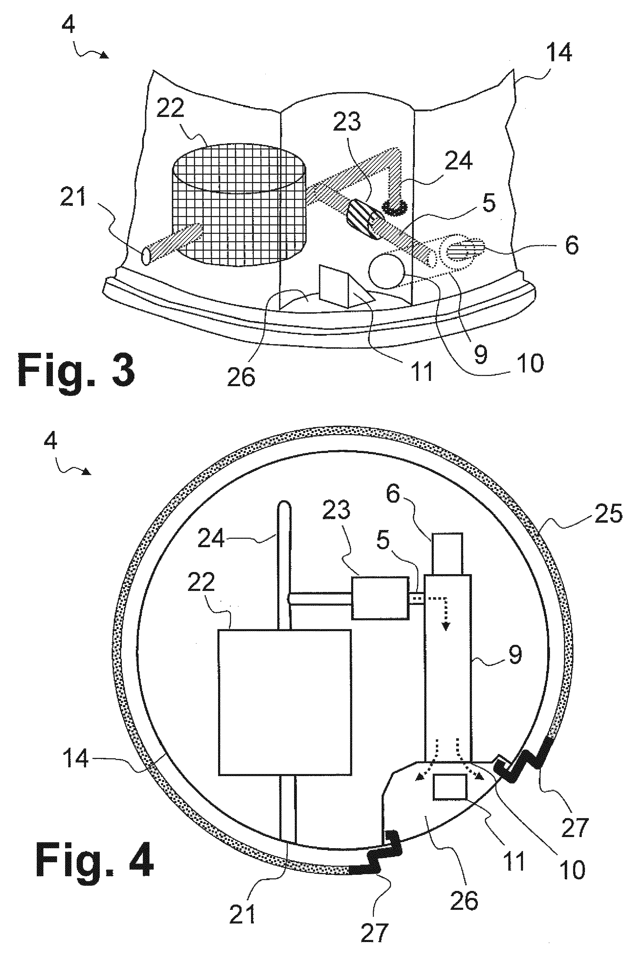

Fig. 3 zeigt eine perspektivische Darstellung einer Fördereinheit 4 für die beschriebene Vorrichtung. Zu erkennen ist auch hier die Pumpe 22, welche dem Tank flüssiges Additiv an der Ansaugstelle 21 entnimmt und hin zu einer Auslassleitung 24 fördert. Von der Auslassleitung 24 zweigt die Rückspülleitung 5 ab, welche mit einem Rücklaufventil 23 gezielt öffenbar und verschließbar ist, um eine Spülung des Messkanals 9 über die Rückspülleitung 5 zu steuern. Der Messkanal 9 endet an einem ersten Kanalende 10 in den Tank. Das erste Kanalende 10 ist an einer Einbuchtung 26 der Fördereinheit 4 bzw. des Gehäuses 14 der Fördereinheit 4 angeordnet. In der Einbuchtung ist auch ein Umlenkmittel 11 vorgesehen, an welchem Wellen, welche von dem Sensor 6 ausgesendet werden, den Messkanal passiert und über das erste Kanalende 10 verlassen haben hin zu einer Flüssigkeitsoberfläche reflektiert werden.

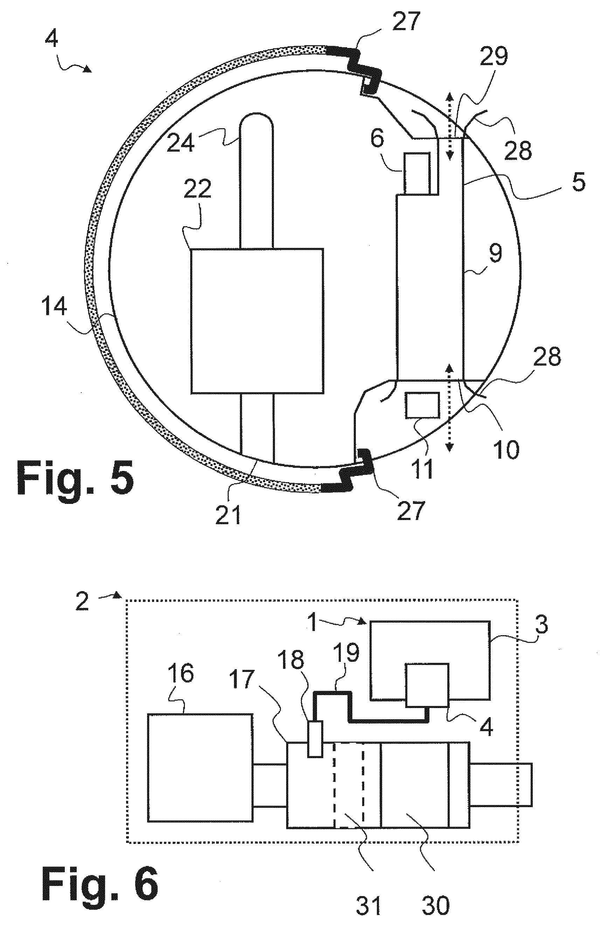

Die Fig. 4 und die Fig. 5 zeigen zwei verschiedene Ausführungsvarianten einer Fördereinheit 4 für die Vorrichtung jeweils in einer Schnittansicht von oben gesehen, wobei die in Fig. 4 dargestellte Ausführungsvariante im Wesentlichen der in den Fig. 1, 2 oder 3 dargestellten Ausführungsvariante entspricht. Die gemeinsamen Merkmale der Fig. 4 und 5 sollen hier zunächst gemeinsam erläutert werden.

In den Fig. 4 und 5 ist jeweils eine Fördereinheit 4 mit einem angeschnittenen zylindrischen Gehäuse 14 dargestellt, welches teilweise von einem Filter 25 umgeben ist. Der Messkanal 9 mit dem Sensor 6 mündet jeweils an einer Einbuchtung 26 mit dem ersten Kanalende 10 in den hier nicht dargestellten Tank, bzw. in einen mit flüssigem Additiv auffüllbaren Innenraum des Tanks. Der Filter 25 weist jeweils Befestigungsvorrichtungen 27 auf, mit dem der Filter 25 so an dem Gehäuse 14 der Fördereinheit 4 befestigt werden kann, dass der Messkanal 9 von einem Innenraum eines Tanks nicht durch den Filter 25 abgedeckt ist. Es existiert vorzugsweise ein freier Strömungsweg aus dem Messkanal 9 hinaus in einen Innenraum eines Tanks für flüssiges Additiv. Eine Ansaugstelle 21 zum Ansaugen von flüssigem Additiv aus dem nicht dargestellten Tank mit Hilfe einer Pumpe 22 ist bei den Ausgestaltungen gemäß den Fig. 4 und 5 jeweils in Abdeckung des Filters 25 angeordnet. Das von der Pumpe 22 angesaugte flüssige Additiv wird also durch den Filter 25 angesaugt und dabei gefiltert bzw. gereinigt. Insbesondere sollen Verunreinigungen in dem flüssigen Additiv nicht in die Pumpe 22 gelangen. Die Pumpe 22 stellt das flüssige Additiv bei den Ausgestaltungen gemäß den Fig. 4 und 5 jeweils an einer Auslassleitung 24 zur Verfügung. Der Sensor 6 ist bei beiden Ausführungsvarianten an einem dem Kanalende 10 gegenüberliegenden Ende des Messkanals 9 angeordnet. Das Umlenkmittel 11 ist an dem Kanalende 10 angeordnet, um Wellen, die vom Sensor 6 durch den Messkanal entlang der hier nicht markierten Messstrecke abgestrahlt werden, nach oben, zu einer Flüssigkeitsoberfläche umzulenken. Die hier nicht ausgezeichnete Messtrecke verläuft bei beiden Ausführungsvarianten entsprechend den Fig. 1 und 2.

Gemäß der Fig. 4 zweigt von der Auslassleitung 24 die Rückspülleitung 5 ab. In der Rückspülleitung 5 befindet sich ein Rücklaufventil 23, mit dem die Rückspülung des Messkanals 9 gesteuert werden kann. Eine Spülung des Messkanals 9 ist durch Pfeile angedeutet.

Bei der Ausgestaltung gemäß Fig. 5 verbindet die Rückspülleitung 5 den Messkanal 9 mit dem Tank. Die Rückspülleitung 5 mündet vorzugsweise an dem zweiten Kanalende 29 (direkt bzw. unmittelbar) in den Tank. Eine Spülung des Messkanals 9 über die Rückspülleitung ist jeweils durch Pfeile angedeutet, welche die Strömung des flüssigen Additivs verdeutlichen. Gemäß der Fig. 5 sind an dem ersten Kanalende 10 und an dem zweiten Kanalende 29 jeweils Einströmmittel 28 angeordnet, welche eine Einströmung des flüssigen Additivs in die Rückspülleitung 5 vereinfachen, wenn Schwappbewegungen des flüssigen Additivs in dem Tank auftreten.

Fig. 6 zeigt Kraftfahrzeug 2, aufweisend eine Verbrennungskraftmaschine 16 und eine Abgasbehandlungsvorrichtung 17 zur Reinigung der Abgase der Verbrennungskraftmaschine 16. In der Abgasbehandlungsvorrichtung 17 ist beispielsweise das Verfahren der selektiven katalytischen Reduktion durchführbar, wozu die Abgasbehandlungsvorrichtung 17 über einen Injektor 18 mit flüssigem Additiv versorgt werden kann, welches insbesondere Reduktionsmittel und besonders bevorzugt wässrige Harnstoff-Lösung ist. Solches Reduktionsmittel wird insbesondere stromauf eines SCR-Katalysators 30 zugegeben, wobei zwischen Injektor 18 und SCR-Katalysators 30 auch mindestens eine weitere Abgasbehandlungseinheit 31 (Mischer, Katalysator, Partikelabscheider, etc.) positioniert sein kann. Der Injektor 18 wird über eine Leitung 19 von einer Vorrichtung 1 mit flüssigem Additiv versorgt, wobei die Vorrichtung 1 einen Tank 3 und eine Fördereinheit 4 umfasst.

Die beschriebene Vorrichtung ist besonders vorteilhaft, weil durch die Spülung eine Verunreinigung des Messkanals vermieden werden kann und daher die Messung des Füllstands in dem Tank für flüssiges Additiv besonders genau erfolgen kann.

### Bezugszeichenliste

- 1: Vorrichtung
- 2: Kraftfahrzeug
- 3: Tank
- 4: Fördereinheit
- 5: Rückspülleitung
- 6: Sensor
- 7: Messstrecke
- 8: Flüssigkeitsoberfläche
- 9: Messkanal
- 10: erstes Kanalende
- 11: Umlenkmittel
- 12: Abstand
- 13: Boden
- 14: Gehäuse
- 15: Referenzfläche
- 16: Verbrennungskraftmaschine
- 17: Abgasbehandlungsvorrichtung
- 18: Injektor
- 19: Leitung
- 20: Öffnung
- 21: Ansaugstelle
- 22: Pumpe
- 23: Rücklaufventil
- 24: Auslassleitung
- 25: Filter
- 26: Einbuchtung
- 27: Befestigungsvorrichtung
- 28: Einströmmittel
- 29: zweites Kanalende
- 30: SCR-Katalysator
- 31: Abgasbehandlungseinheit

## Patentansprüche

1. Vorrichtung (1) zur Bereitstellung eines flüssigen Additivs für ein Kraftfahrzeug (2), aufweisend einen Tank (3) zur Speicherung des flüssigen Additivs und eine Fördereinheit (4) zur Förderung des flüssigen Additivs aus dem Tank (3), und einen Sensor (6), welcher Wellen abstrahlt und empfängt und dazu eingerichtet ist, über eine Laufzeitmessung der Wellen entlang einer Messtrecke (7) zu einer Flüssigkeitsoberfläche (7) in dem Tank (3) und zurück zu dem Sensor (6) den Füllstand des flüssigen Additivs in dem Tank (3) zu messen, wobei die Messtrecke (7) zumindest teilweise durch einen Messkanal (9) verläuft, **dadurch gekennzeichnet, dass** zumindest eine Rückspülleitung (5) in den Messkanal (9) mündet, so dass eine Spülung des Messkanal (9) hin zum Tank (3) erfolgen kann.

2. Vorrichtung (1) nach Patentanspruch 1, aufweisend eine Rückspülleitung (5), die an die Fördereinheit (4) angeschlossen ist und zur Spülung des Messkanals (9) eine Kreisförderung von flüssigem Additiv durch die Fördereinheit (4), die Rückspülleitung (5) und den Messkanal (9) zurück in den Tank (3) ermöglicht.

3. Vorrichtung (1) nach Patentanspruch 1, wobei die Rückspülleitung (5) direkt mit dem Tank (3) verbunden ist, so dass durch Bewegungen des flüssigen Additivs in dem Tank (3) eine Spülung des Messkanals (9) über die Rückspülleitung (5) erfolgt.

4. Vorrichtung (1) nach Patentanspruch 3, wobei der Messkanal (9) zumindest ein erstes Kanalende (10) aufweist, welches mit dem Tank (3) verbunden ist und die Rückspülleitung (5) ein zweites Kanalende (29) aufweist, welches mit dem Tank (3) verbunden ist, wobei das erste Kanalende (10) und das zweite Kanalende (29) auf derselben geodätischen Höhe in den Tank (3) münden.

5. Vorrichtung (1) nach einem der vorhergehenden Patentansprüche, wobei in der Messtrecke (7) ein Umlenkmittel (11) vorgesehen ist, welches dazu geeignet ist, von dem Sensor (6) ausgesendete Wellen aus dem Messkanal (9) hinaus und hin zu der Flüssigkeitsoberfläche (8) umzulenken.

6. Vorrichtung (1) nach einem der vorhergehenden Patentansprüche, wobei der Messkanal (9) parallel zur Flüssigkeitsoberfläche (8) verläuft.

7. Vorrichtung (1) nach einem der vorhergehenden Patentansprüche, wobei die Fördereinheit (4) ein Gehäuse (14) aufweist, welches den Sensor (6) und den Messkanal (9) umfasst, wobei das Gehäuse (14) am Boden (13) des Tanks (3) angeordnet ist.

8. Vorrichtung (1) nach Patentanspruch 7, wobei das Gehäuse (14) eine Einbuchtung aufweist, in der der Messkanal (9) mit einem ersten Kanalende (10) in den Tank (3) mündet.

9. Vorrichtung (1) nach Patentanspruch 7 oder 8, wobei das Gehäuse (14) zumindest teilweise von einem Filter (25) umgeben ist, durch welchen die Fördereinheit (4) dem Tank (3) das flüssige Additiv entnimmt, wobei der Filter (25) den Messkanal (9) nicht abdeckt.

10. Kraftfahrzeug (2), aufweisend eine Verbrennungskraftmaschine (16) und eine Abgasbehandlungsvorrichtung (17) zur Reinigung der Abgase der Verbrennungskraftmaschine (16), sowie eine Vorrichtung (1) nach einem der vorhergehenden Patentansprüche, wobei der Abgasbehandlungsvorrichtung (17) mit der Vorrichtung (1) ein flüssiges Additivs zugeführt werden kann.

## Claims

1. Device (1) for supplying a liquid additive for a motor vehicle (2), having a tank (3) for storing the liquid additive and having a delivery unit (4) for delivering the liquid additive out of the tank (3), and having a sensor (6) which emits and receives waves and which is designed to measure the fill level of the liquid additive in the tank (3) by way of a propagation time measurement of the waves along a measurement path (7) to a liquid surface (7) in the tank (3) and back to the sensor (6), wherein the measurement path (7) runs at least partially through a measurement duct (9), **characterized in that** at least one backflushing line (5) issues into the measurement duct (9) such that flushing of the measurement duct (9) to the tank (3) can be performed.

2. Device (1) according to Patent Claim 1, having a backflushing line (5) which is connected to the delivery unit (4) and which, for the flushing of the measurement duct (9), permits a circulation of liquid additive through the delivery unit (4), through the backflushing line (5) and through the measurement duct (9) back into the tank (3).

3. Device (1) according to Patent Claim 1, wherein the backflushing line (5) is connected directly to the tank (3), such that movements of the liquid additive in the tank (3) result in flushing of the measurement duct (9) via the backflushing line (5).

4. Device (1) according to Patent Claim 3, wherein the measurement duct (9) has at least one first duct end (10) which is connected to the tank (3) and the backflushing line (5) has a second duct end (29) which is connected to the tank (3), wherein the first duct end (10) and the second duct end (29) issue into the tank (3) at the same geodetic height.

5. Device (1) according to one of the preceding patent claims, wherein, in the measurement path (7), there is provided a diverting means (11) which is suitable for diverting waves emitted by the sensor (6) out of the measurement duct (9) and toward the liquid surface (8).

6. Device (1) according to one of the preceding patent claims, wherein the measurement duct (9) runs parallel to the liquid surface (8).

7. Device (1) according to one of the preceding patent claims, wherein the delivery unit (4) has a housing (14) which comprises the sensor (6) and the measurement duct (9), wherein the housing (14) is arranged on the base (13) of the tank (3).

8. Device (1) according to Patent Claim 7, wherein the housing (14) has an indentation in which the measurement duct (9) issues, by way of a first duct end (10), into the tank (3).

9. Device (1) according to Patent Claim 7 or 8, wherein the housing (14) is at least partially surrounded by a filter (25) through which the delivery unit (4) extracts the liquid additive from the tank (3), wherein the filter (25) does not cover the measurement duct (9).

10. Motor vehicle (2) having an internal combustion engine (16) and having an exhaust-gas treatment device (17) for the purification of the exhaust gases of the internal combustion engine (16) and also having a device (1) according to one of the preceding patent claims, wherein a liquid additive can be fed to the exhaust-gas treatment device (17) by means of the device (1).

## Revendications

1. Ensemble (1) destiné à préparer un additif liquide pour un véhicule automobile (2), l'ensemble présentant une cuve (3) qui conserve l'additif liquide, une unité de transport (4) qui refoule l'additif liquide vers la cuve (3) et un capteur (6) qui émet et reçoit des ondes et est conçu pour mesurer le niveau de remplissage de la cuve (3) par l'additif liquide par l'intermédiaire d'une mesure du temps de parcours des ondes le long d'un parcours de mesure (7) jusqu'à la surface (7) du liquide dans la cuve (3) et en retour vers le capteur (6), le parcours de mesure (7) s'étendant au moins en partie dans un canal de mesure (9),
**caractérisé en ce que**
au moins un conduit (5) de rinçage débouche dans le canal de mesure (9) de manière à permettre un rinçage du canal de mesure (9) en direction de la cuve (3).

2. Ensemble (1) selon la revendication 1, présentant un conduit de rinçage (5) raccordé à l'unité de transport (4) et qui, en vue de rincer le canal de mesure (9), assure un transport en circuit fermé de l'additif liquide dans l'unité de transport (4), le conduit de rinçage (5) et le canal de mesure (9) en retour vers la cuve (3).

3. Ensemble (1) selon la revendication 1, dans lequel le conduit de rinçage (5) est raccordé directement à la cuve (3) de telle sorte que des déplacements de l'additif liquide dans la cuve (3) assurent un rinçage du canal de mesure (9) par l'intermédiaire du conduit de rinçage (5).

4. Ensemble (1) selon la revendication 3, dans lequel le canal de mesure (9) présente au moins une première extrémité (10) raccordée à la cuve (3) et le conduit de rinçage (5) présente une deuxième extrémité (29) reliée à la cuve (3), la première extrémité (10) et la deuxième extrémité (29) débouchant dans la cuve (3) à la même hauteur géodésique.

5. Ensemble (1) selon l'une des revendications précédentes, dans lequel un moyen de déviation (11) permettant de dévier les ondes émises par le capteur (6) hors du canal de mesure (9) et vers la surface (8) du liquide est prévu dans le parcours de mesure (7).

6. Ensemble (1) selon l'une des revendications précédentes, dans lequel le canal de mesure (9) s'étend parallèlement à la surface (8) du liquide.

7. Ensemble (1) selon l'une des revendications précédentes, dans lequel l'unité de transport (4) présente un boîtier (14) qui comporte le capteur (6) et le canal de mesure (9), le boîtier (14) étant disposé sur le fond (13) de la cuve (3).

8. Ensemble (1) selon la revendication 7, dans lequel le boîtier (14) présente un retrait dans lequel le canal de mesure (9) débouche dans la cuve (3) par une première extrémité (10).

9. Ensemble (1) selon les revendications 7 ou 8, dans lequel le boîtier (14) est entouré au moins en partie par un filtre (25) par lequel l'unité de transport (4) prélève dans la cuve (3) l'additif liquide, le filtre (25) ne recouvrant pas le canal de mesure (9).

10. Véhicule automobile (2) présentant un moteur (16) à combustion interne, un ensemble (17) de traitement des gaz d'échappement destiné à épurer les gaz d'échappement du moteur (16) à combustion interne et un ensemble (1) selon l'une des revendications précédentes, un additif liquide pouvant être apporté par l'ensemble (1) à l'ensemble (17) de traitement des gaz d'échappement.
